# EUROPEAN PATENT SPECIFICATION

(11) **EP 0 411 688 B1**
(45) Date of publication and mention of the grant of the patent: **12.07.1995**
(21) Application number: 90201943.9
(22) Date of filing: 18.07.1990
(51) Int. Cl.: B23D 33/00

(54) **Process and facility for shearing to length steel bars coming from a rolling mill**
Verfahren und Vorrichtung zum Scherschneiden von aus dem Walzwerk kommendem Stabstahl in Abschnitte
Procédure et disposition pour cisaillage d'acier en barres à tronçons qui vient d'un laminoir

(30) Priority: 31.07.1989 IT 2139889
(43) Date of publication of application: 06.02.1991
(73) Proprietor: POMINI S.p.A., 21053 Castellanza (VA) (IT)
(72) Inventor: Mantovan, Gianfranco, I-21052 Busto Arsizio (Varese) (IT); Fay, Gianfranco, I-20122 Milan (IT)
(74) Representative: Fusina, Gerolamo

(56) References cited:
- EP-A- 0 114 791
- DE-A- 3 824 119
- FR-A- 2 503 682

## Description

The present invention relates to a process and a facility for shearing to commercial length steel bars coming from a rolling mill, wherein by the term "bars" products are meant which are rolled by means of a continuous rolling process, and may have a whatever cross-section.

Rolling mills for rolling steel bars are known in the art, which dowstream the last rolling stand shearing means are provided in order to shear the rolled material to a length which is a multiple of the commercial length, and is generally comprised within the range of from 40 to 100 metres.

Therefore in a tradizional rolling mill -- whether of the type in which a natural air cooling is provided for the rolled material, or in which a forced on-line cooling is provided -- downstream the last rolling stand a shear is positioned, which performs the task of shearing the bar to a length which is a multiple of the commercial length. Downstream said shear a feed table is provided, which feeds the sheared bars to a cooling bed having such a length as to enable the sheared bar material to be braked by exploiting the natural friction of the same material with the plane along which it slides; said length is generally comprised within the range of from 35 to 60 metres, as a function of the maximum rolling speed.

Downstream the feed table, the cooling bed is installed, which has a length comprised, as said, within the range of from 40 to 100 metres, and a width of from 8 to 12 metres.

When they leave the cooling bed, the bars are fed through a roller apron to a shear wherein the simultaneous shearing takes place of a plurality of cold bars to commercial length (said length is generally comprised within the range of from 8 to 24 metres).

Then apparatuses follow, which perform the tasks of forming the bundles, tying and subsequently discharging said end bar bundles to the material storage.

This type of device suffers from the drawbacks that it occupies a considerably large surface-area, with a length between the finishing stand and the end of the cooling bed, which is comprised within the range of from 75 to about 160 metres, of implying a considerable burden for sheds, foundations, machines, installed powers and staff, and consequently with extremely high operations and maintenance costs.

Furthermore, rolling mills are known in which the bars, sheared to a length multiple of the commercial length by means of a shear installed downstream the finishing stand, are selectively fed to channel-shaped chambers of apparatuses which feed the same bars -- while simultaneously cooling them -- to the subsequent operating units.

An equipment of this kind is disclosed and illustrated, e.g., in EP-A-114.791, filed on January 17th, 1984 to the name of Danieli & C. Officine Meccaniche S.p.A..

Said kind of equipment, although reduces the overall dimensions of the rolling mill, has not been shown to be capable of receiving the bar already sheared to commercial length, in that the required braking cycle would be too long. Furthermore they can process only a limited range of bar diameters.

FR-A-2503682 relates to a stacker of plane plates comprising a rotating drum provided with radial seats where the plates are feeded by a chain conveyor. The plates fall from the seats within a collecting container below.

The general purpose of the present invention is of obviating the above listed drawbacks which can be observed in devices of the type known from the prior art, by providing a device for shearing to length rolled bars, which is so conceived, as to occupy a minimal room as compared to the devices known from the prior art.

Said purpose is achieved by a process and apparatus according to the annexed claims.

The structural and functional characteristics of the present invention and its advantages over the technique known from the prior art wilt be better understood from the following disclosure, made by referring to the hereto attached schematic drawings, which show an example of a device constructed according to the innovative principles of the same invention.

In the drawings:
Figure 1 shows a partially sectional elevation view which shows the device according to the present invention;
Figure 2 shows a plan view;
Figure 3 shows a sectional view made according to the plane defined by path III-III shown in Figure 2;
Figure 4 shows a sectional view made according to the plane defined by path IV-IV shown in Figure 2;
Figure 5 shows a plan view of the rack by means of which the bars are transferred;

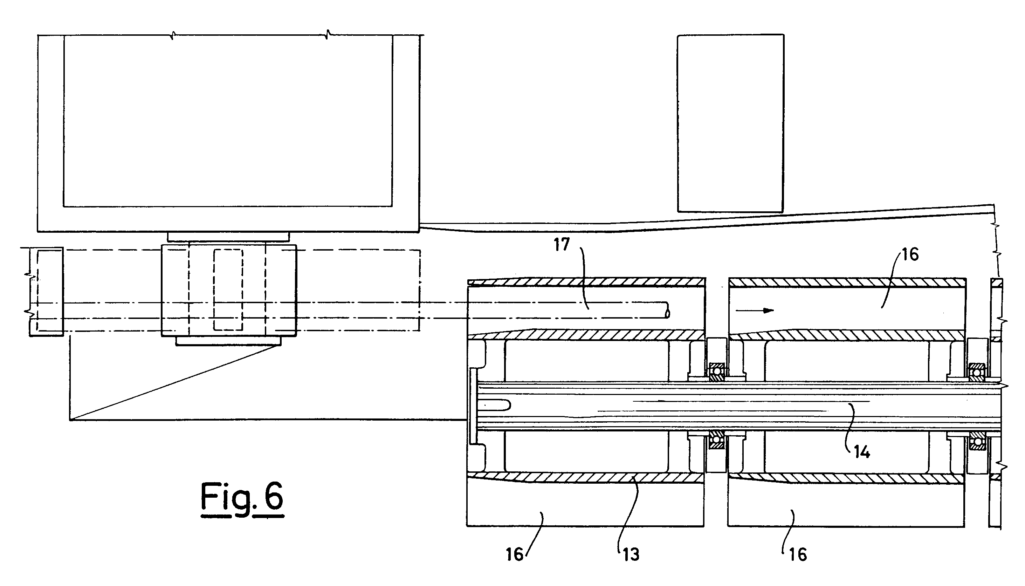

Figure 6 shows a sectional view made according to the plane defined by path VI-VI shown in Figure 1;
Figures from 7 to 10 show the different operating steps of the shear; and
Figure 11 shows a possible constructional variant.

Referring to the drawings, the device according to the present invention is structurally formed by the combination of at least one rotary shear 10, which performs the shearing to commercial length of the bar coming from the rolling mill, and of an apparatus 11 for braking and distributing the sheared bars onto conveyor means which perform the task of feeding said bars, while simultaneously cooling them, to devices which form, tie and store bar bundles.

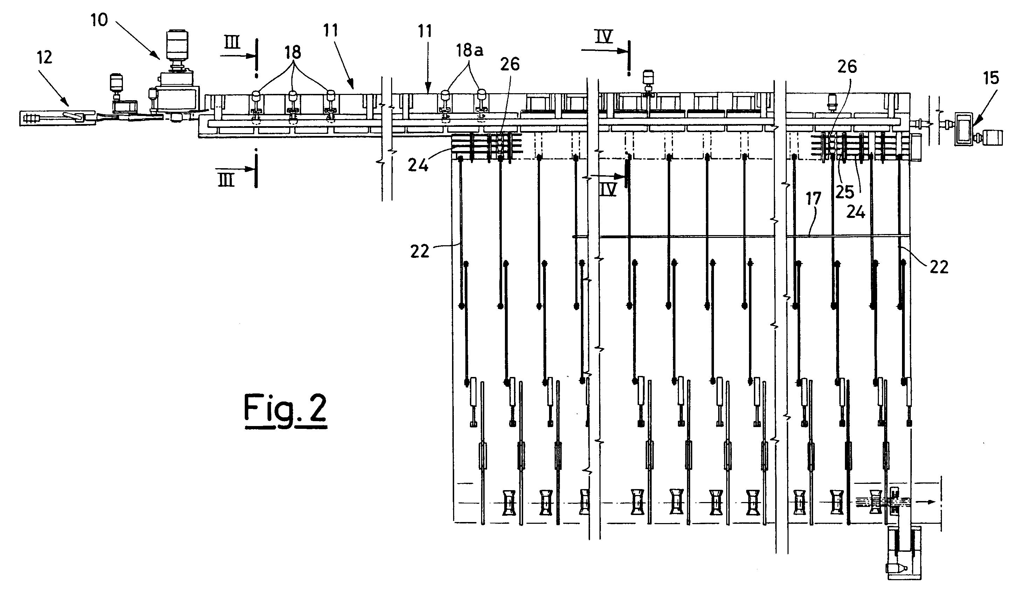

Upstream the shear 10 a device 12 can be provided (Figure 2), in order to perform the on-line thermal treatment of the bar coming from the finishing stand of the rolling mill; said device 12 is neither described nor illustrated in detail herein, in that it can be of a type known from the prior art, such as, e.g., the device which is the subject-matter of EP-A-064.771.

Also the shear 10, which anyway is roughly illustrated and described herein, can be of known type, e.g., it can be similar to the shear which is the subject-matter of FR-A-1.451.927 to which reference is made in case further clarifications are needed.

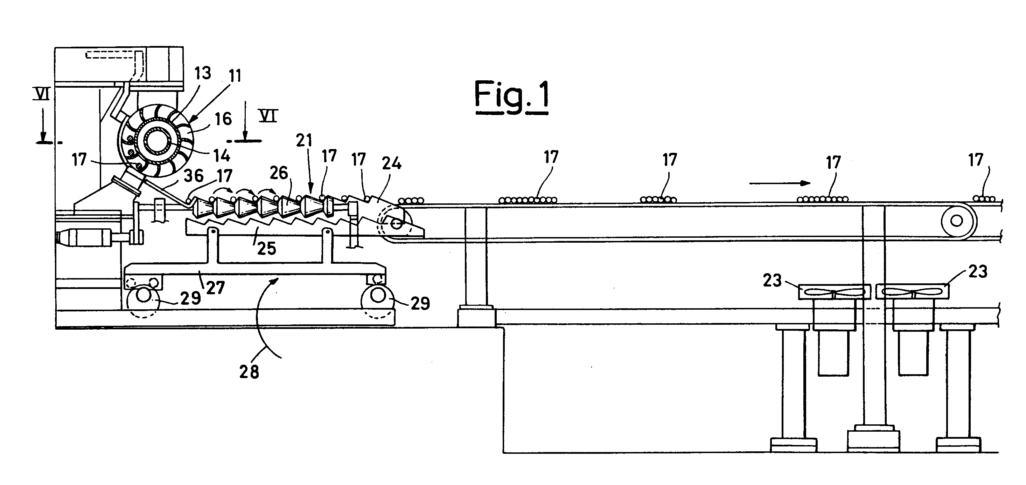

Referring in particular to Figures 1-4 of the attached drawings, the apparatus 11 is structurally constituted by a plurality of drums 13 arranged side-by-side to each other at a short mutual distance, and keyed on a same shaft 14 which is operatively coupled with a drive motor means 15, which causes the drums to revolve in a stepwise fashion.

Each drum 13 has a plurality of chambers, or circumferential seats 16, inside the interior of each of which a bar 17 is received, which is already cut to a commercial length by the upstream shear 10.

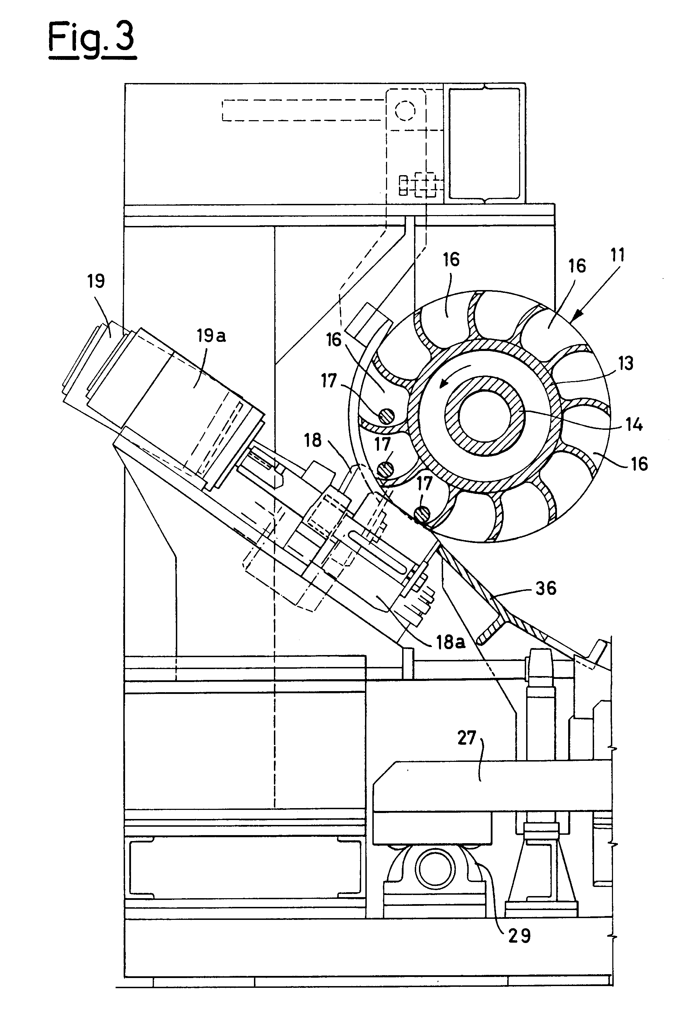

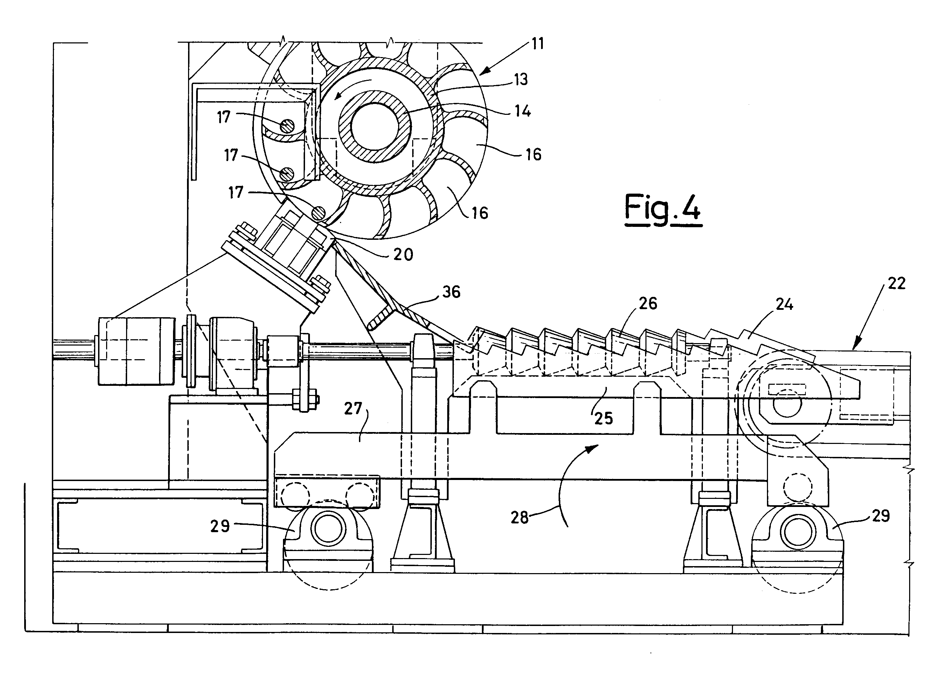

With said drums 13 rolls 18, 18a -- driven by respective motor means 19, 19a -- cooperate (Figure 2 and 3), which perform the task of causing the bars 17 to advance inside the interior of the chambers 16 of the same drums 13, and magnetic braking means 20 cooperate (Figure 4), which perform the task of braking the bars 17 in order to make it possible said bars to be discharged at the suitable speed and in the prefixed position onto the underlying conveyor means.

Of course, the magnetic braking devices 20 can be replaced by other means, suitable for the intended purpose, of mechanical type.

A mechanical braking action can be obtained by means of pairs of rolls, braking blocks, and so forth, or by means of natural friction along supporting planes.

The rolls 18 perform the task of driving the bars 17 before and after the shearing step, and the rolls 18a perform the task of causing the sheared bar 17 to advance inside the interior of said chamber 16 of said drums.

The above said conveyor means are constituted by a so-said rack 21, followed by a chain conveyor means 22, under which blowers 23 (Figure 1) can be installed, the purpose of which is of cooling the bars 17 sheared to commercial length.

The rack 21 (Figures 1, 4 and 5) can be of the per se well-known type comprising a saw-teeth-shaped stationary bed 24, intersected by a set of mobile, also saw-teeth-shaped, rakes 25, and by a set of conical, motor-driven rolls 26, which are aligned with the chains 22 of the conveyor unit.

The rakes 25 are mounted on a framework 27 are driven to move by rotary movement in the direction of the arrow 28 thanks to a cam drive system 29.

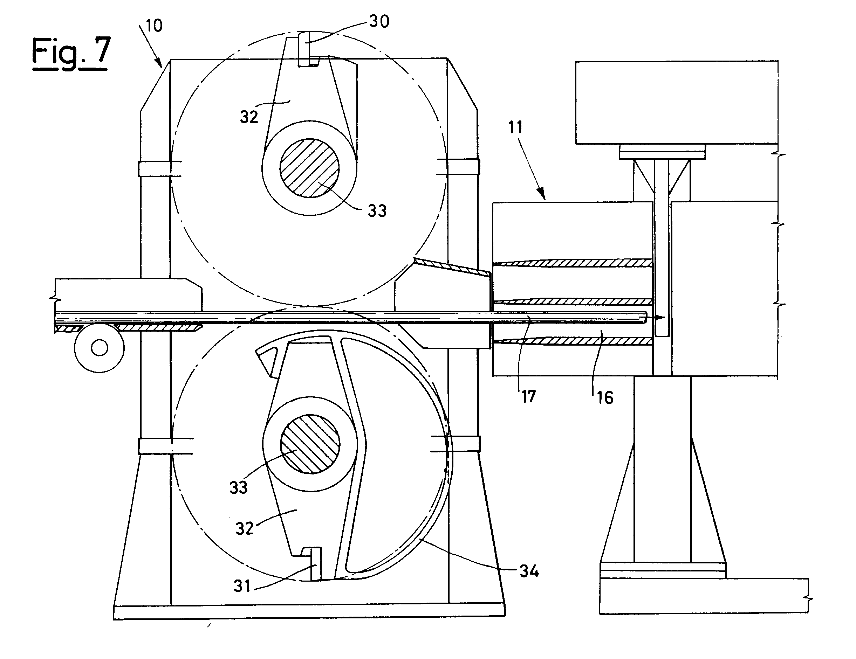

The shear 10 (Figures 7-10) is structurally formed by a pair of blades 30, 31, i.e., respectively an upper blade 30 and a lower blade 31, mounted on revolutionary arms 32 which revolve around shafts 33.

The above disclosed facility operates as follows.

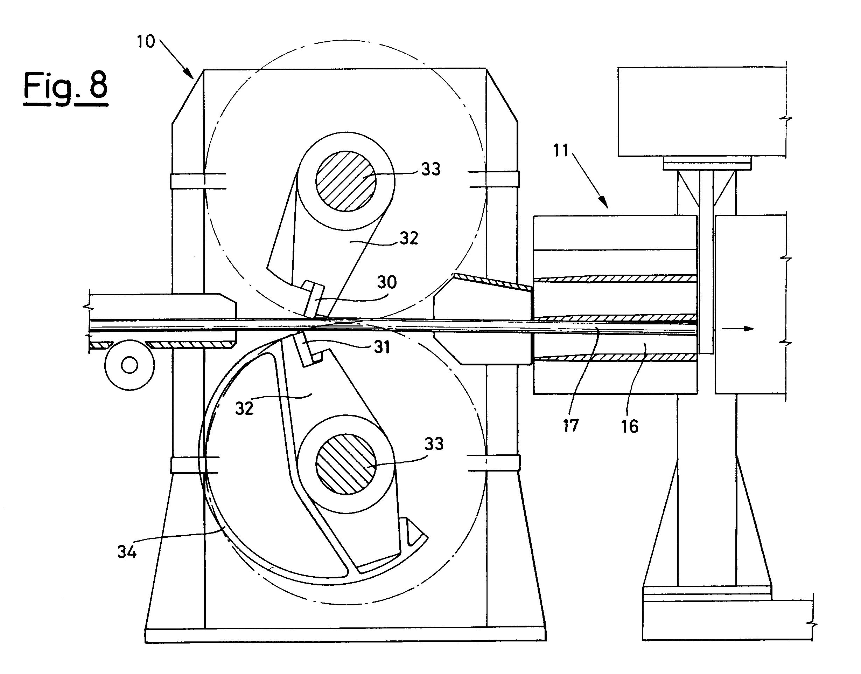

The blades 30, 31 of the shear 10 are kept normally stationary in their respective positions as shown in Figure 7. When the shearing command signal is generated by a control processor (not shown), the blades start operating and reach the speed of the bar 17 before starting shearing it (Figure 8).

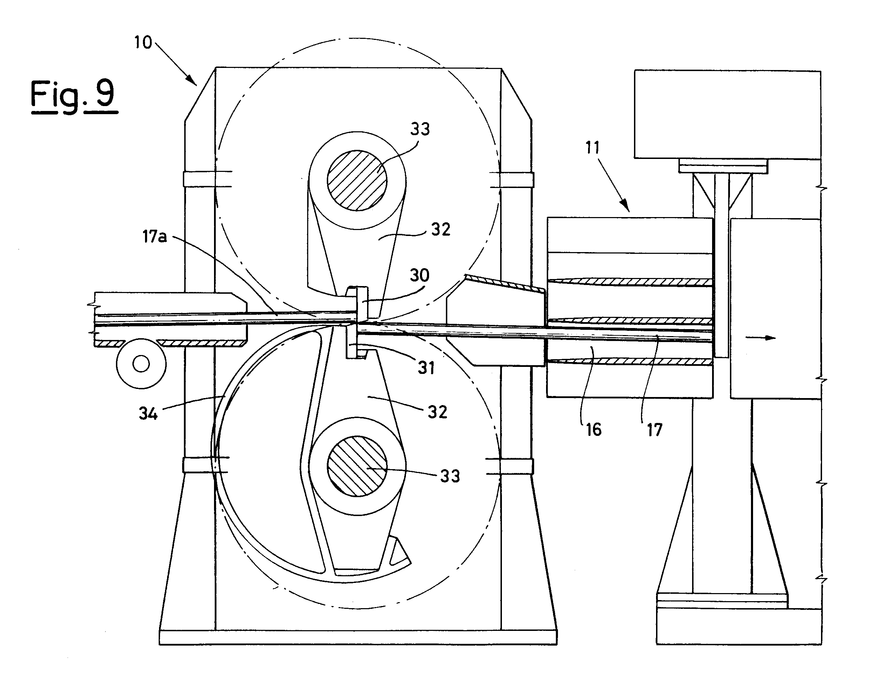

When the shearing takes place (Figure 9) the upper blade 30 lowers the trailing end of the sheared bar 17, and the lower blade 31 lifts the leading end of the successive incoming, bar 17a.

In that way, a first modification is obtained in the respective trajectories of the bar 17 sheared to commercial length, which is charged to one of the circumferential chambers 16 of the first drum 13, and of the bar 17a coming from the rolling mill.

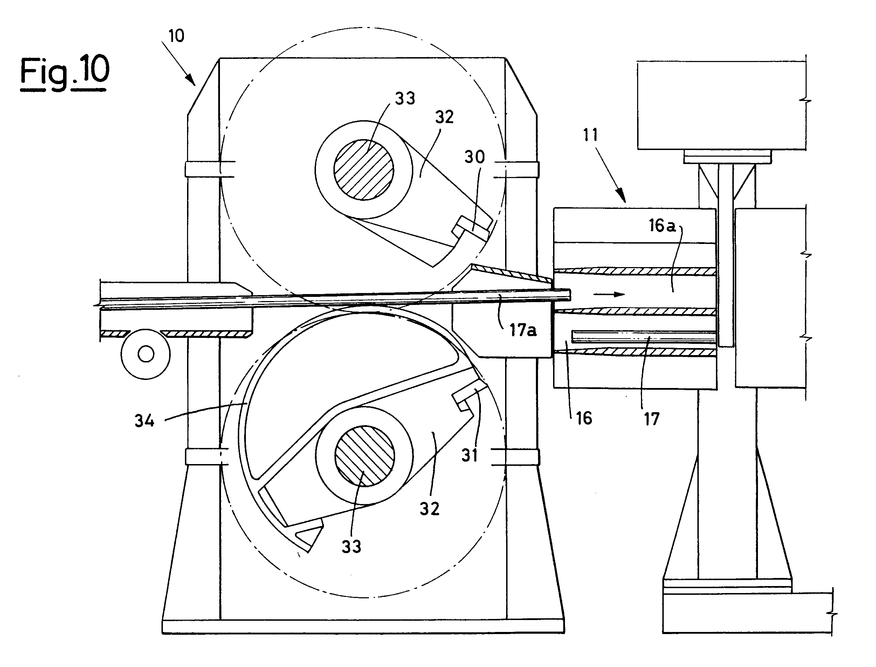

As shown in Figure 10, a circular baffle 34 fastened to the arms 32 bearing the blades 31, causes the leading end of the bar 17a fed by the rolling mill to further move upwards, until said leading end enters the circumferential chamber 16a, following the circumferential chamber 16, of the first drum 13.

The revolution of the blades 30, 31 and the revolution of the drum 13 take place in phase with each other, so that each bar sheared to commercial lenght is charged, in the above disclosed way, and as clearly illustrated in Figure 7-10, in succession, to one of the circumferential chambers of the drum 13.

One will understand how at each shearing cycle a bar is consequently brought by the revolution of the drum 13 into engagement first with the drive rolls 18a and then with the braking magnets 20, which cause the same bar to decelerate in order that it can be discharged, through a chute 36, exactly on the saw-toothed rack 21 installed under the drums 13 in the region in which the discharging of the bars is planned to take place (Figure 2).

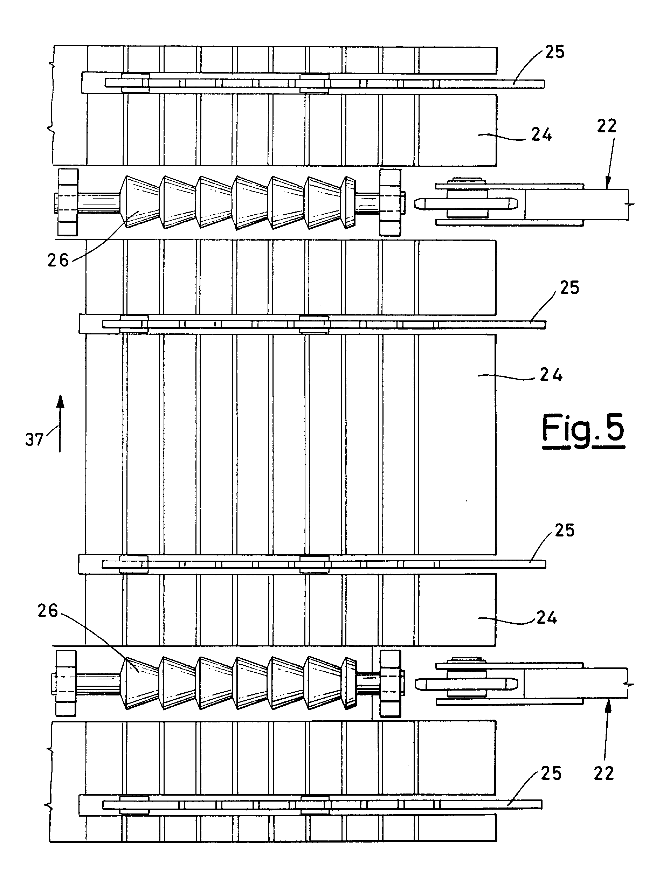

The bars positioned on the rack 21 are advanced by the rolls 26 in the direction of the arrow 37 (Figure 5) and are stepwise moved in the direction of the arrow 38, thanks to the eccentric revolutionary movement of the rakes 25, up to be engaged by the chain conveyor unit 22, which cause the same bars to advance first to the area of the blowers 23 and then towards the outlet end of the facility, where systems known from the prior art are provided in order to tie the same bars in bundle form, and to store said bar bundles.

To those skilled in the art, it will be clearly evident how the facility according to the present invention occupies a room which is considerably smaller than as occupied by the facilities of the types known from the prior art, in that the cooling bed and the feed table, which feeds the bars to it, are at all absent, thanks to the particular arrangement of the shear 10 which shears the bar to commercial length soon downstream the rolling mill and upstream the rotary-drums apparatus, which brakes the sheared bars and distributes them on a conveyor unit, which conveys said bars to the bundle-tying and bundle storing equipment; while it runs along the path from the shear to the facility outlet, the sheared bar will undergo an additional cooling owing to the action of surrounding air, or with the aid of the blowers 23.

The bar braking and distribution apparatus 11 as disclosed for merely exemplifying, non-limitative purposes, can be modified, without anyway departing from the scope of the present invention.

So, the drum 13 can be replaced, e.g., by a chain conveyor apparatus 113, of the type as schematically shown in Figure 12. Furthermore, the drum 13, or the conveyor apparatus 113, can revolve counterclockwise rather than clockwise.

In order to shear the bars to length, also two shears arranged on-line can be provided. In that case, whilst with one single shear to one bar length one shearing cycle corresponds, when two shears are provided the shearing cycle takes place every two bar lengths.

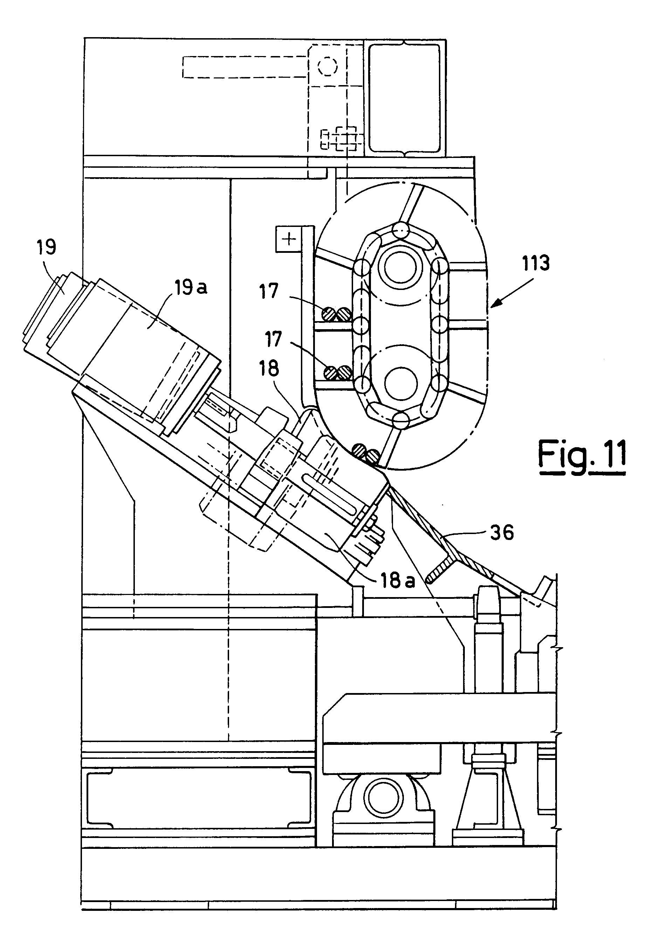

Simultaneously, two or more bars can be sheared instead of one bar only (Figure 11).

Finally, a braking/distributing apparatus could be also provided, in which the bars, instead of being moved vertically, as disclosed hereinabove, are moved horizontally.

## Claims

1. Process for cutting to commercial length steel bars coming from a rolling mill, which process comprises the steps of:
- feeding the continuous rolled product to a first collecting chamber, which is a part of a braking/distributing apparatus, constituted by a plurality of stepwise revolving coaxial drums whose revolution steps take place in phase with the shear, with each drum being provided with circumferential collection chambers suitable for receiving the bars sheared to commercial length and for discharging them into said conveyor means, wherein braking means for braking said bars cooperate with said drums, which braking means face the interior of said chambers,
- shearing the rolled product to form a first bar of commercial length and a new leading end on the rolled product,
- braking this first bar in phase with the shearing step in a first of the plurality of collection chambers,
- rotating the drum in phase with the shearing of the first bar and the feeding of the rolled product and introducing the new leading end of the rolled product in a second collection chamber,
- shearing to commercial length said second bar and to distribute the first bar of commercial length onto conveyor means.

2. Apparatus for practicing the process according to claim 1, comprising,
- at least one rotary shear (10), for shearing to commercial length the bar (17) exiting the rolling mill, and a braking/distributing apparatus (11)
- characterised in that the braking/distributing apparatus (11) is constituted, by a plurality of stepwise revolving coaxial drums (13) whose revolution steps take place in phase with the shear (10), with each drum being provided with circumferential chambers (16) suitable for receiving the bar (17) sheared to commercial length and for discharging them onto said conveyor means, wherein braking means (20) for braking said bars (17) cooperate with said drums (13), which braking means (20) face the interior of said chambers (16).

3. Apparatus according to claim 2, characterized in that said conveyor means are constituted by a rack (21) followed by a chain conveyor unit (22) under which blowers (23) are installed.

4. Apparatus according to claim 2, characterized in that with said drums (13) bar-advancing rolls (18, 18a) cooperate which perform the task of advancing the bars (17), which rolls (18, 18a) face the interior of said chambers (16).

5. Apparatus according to claim 2, characterized in that said braking means (20) are of magnetic type.

6. Apparatus according to claim 2, characterized in that said apparatus (11) comprises a chain conveyor unit (113).

7. Apparatus according to claim 2, characterized in that braking means are of mechanical type.

8. Apparatus according to claim 7, characterized in that said braking means are constituted by braking blocks.

9. Apparatus according to claim 7, characterized in that said braking means are constituted by rolls.

10. Apparatus according to claim 7, characterized in that said braking means are constituted by supporting beds, along which the bars run with friction.

## Patentansprüche

1. Verfahren zum Zuschneiden von Stahlstangen, die von einem Walzwerk herkommen, auf handelsübliche Längen, wobei dieses Verfahren die folgenden Schritte aufweist:
- Zuführen des kontinuierlichen, gewalzten Erzeugnisses zu einer ersten Sammelkammer, die Teil einer Brems-/Verteilervorrichtung ist, gebildet von einer Anzahl stufenweise umlaufender, koaxialer Trommeln, deren Umdrehungsschritte in Phasenübereinstimmung mit der Abscherung stattfinden, wobei jede Trommel mit Umfangs-Sammelkammern versehen ist, die zur Aufnahme der Stangen eingerichtet sind, die auf handelsübliche Länge abgeschert wurden, und zu deren Abgabe in die genannten Fördermittel , worin die Bremsmittel zum Abbremsen der genannten Stangen mit den genannten Trommeln zusammenwirken, und diese Bremsmittel dem Inneren der genannten Kammern zugewandt sind,
- Abscheren des gewalzten Produkts zur Bildung einer ersten Stange mit handelsüblicher Länge und eines neuen vorderen Endes am gewalzten Produkt,
- Abbremsen dieser ersten Stange in Phasenübereinstimmung mit dem Abscherungsschritt in einer ersten der Vielzahl von Sammelkammern,
- Drehen der Trommel in Phasenübereinstimmung mit dem Abscheren der ersten Stange und der Zufuhr des gewalzten Produkts und Einleiten des neuen vorderen Endes des gewalzten Produkts in eine zweite Sammelkammer,
- Abscheren der genannten zweiten Stange auf handelsübliche Länge und zum Zuteilen der ersten Stange mit Handelsüblicher Länge an die Fördermittel.

2. Vorrichtung zum Durchführen des Verfahrens gemäß dem Anspruch 1, mit
- mindestens einer rotierenden Schere (10) zum Abscheren der Stange (17), die aus dem Walzwert austritt, auf handelsübliche Länge, und einer Brems-/Verteilervorrichtung (11),
- dadurch gekennzeichnet, daß die Brems-/Verteilervorrichtung (11) von einer Vielzahl stufenweise umlaufender, koaxialer Trommeln (13) gebildet ist, deren Umdrehungsschritte in Phasenübereinstimmung mit der Schere (10) stattfinden, wobei jede Trommel mit Umfangskammern (16) versehen ist, die zur Aufnahme der auf handelsübliche Länge abgescherten Stangen (11) und zu deren Abgabe an die genannten Fördermittel eingerichtet sind, worin Bremsmittel (20) zum Abbremsen der genannten Stangen (17) mit den genannten Trommeln (13) zusammenwirken, wobei diese Bremsmittel (20) dem Inneren der Kammern (16) zugewandt sind.

3. Vorrichtung nach Anspruch 2, dadurch gekennzeichnet, daß die genannten Fördermittel von einer Zahnstange (21) gebildet sind, die gefolgt ist von einer Kettenförderereinheit (22), unter welcher Lüfter (23) angebracht sind.

4. Vorrichtung nach Anspruch 2, dadurch gekennzeichnet, daß mit den genannten Trommeln (13) stangenfördernde Rollen (18, 18a) zusammenwirken, die die Aufgabe ausführen, die Stangen (17) voranzubewegen, wobei diese Rollen (18, 18a) dem Inneren der genannten Kammern (16) zugewandt sind.

5. Vorrichtung nach Anspruch 2, dadurch gekennzeichnet, daß die genannten Bremsmittel (20) magnetischer Art sind.

6. Vorrichtung nach Anspruch 2, dadurch gekennzeichnet, daß die genannte Vorrichtung (11) eine Kettenförderereinheit (113) aufweist.

7. Vorrichtung nach Anspruch 2, dadurch gekennzeichnet, daß die Bremsmittel mechanischer Art sind.

8. Vorrichtung nach Anspruch 7, dadurch gekennzeichnet, daß die genannten Bremsmittel von Bremsblöcken gebildet sind.

9. Vorrichtung nach Anspruch 7, dadurch gekennzeichnet, daß die genannten Bremsmittel von Rollen gebildet sind.

10. Vorrichtung nach Anspruch 7, dadurch gekennzeichnet, daß die genannten Bremsmittel durch tragende Betten gebildet sind, längs deren die Stangen mit Reibung laufen.

## Revendications

1. Procédé de découpe à la longueur du commerce de barres d'acier provenant d'un laminoir, procédé qui comprend les étapes suivantes :
- introduction du produit laminé en continu dans une première chambre de réception, faisant partie d'un appareil de freinage/répartition, constitué d'une pluralité de tambours coaxiaux tournant pas-à-pas dont les pas de ratation sont en phase avec ceux de la cisaille, chaque tambour étant pourvu de chambres de réception circonférentielles adaptées à recevoir les barres cisaillées à la longueur du commerce et à les décharger sur un convoyeur, des moyens de freinage, prévus pour freiner les barres, coopérant avec les tambours, moyens de freinage qui sont placés en regard des chambres,
- cisaillement du produit laminé pour former une première barre de la longueur du commerce et une nouvelle extrémité avant sur le produit laminé,
- freinage de cette première barre en phase avec l'étape de cisaillement dans une première chambre de réception faisant partie de la pluralité de chambres,
- rotation du tambour en phase avec le cisaillement de la première barre et l'introduction du produit laminé et introduction de la nouvelle extrémité avant du produit laminé dans une deuxième chambre de réception,
- cisaillement à la longueur du commerce de la deuxième barre et acheminement de la première barre à la longueur du commerce sur un convoyeur.

2. Appareil de mise en oeuvre du procédé selon la revendication 1, comprenant
- au moins une cisaille rotative (10), destinée à cisailler à la longueur du commerce la barre (17) sortant du laminoir, et un appareil de freinage/répartition (11)
caractérisé en ce que l'appareil de freinage/répartition (11) est constitué d'une pluralité de tambours (13) coaxiaux tournant pas-à-pas dont les pas de rotation sont en phase avec ceux de la cisaille (10), chaque tambour étant pourvu de chambres circonférentielles (16) adaptées à recevoir la barre (17) cisaillée à la longueur du commerce et à les décharger sur le convoyeur, des moyens de freinage (20) prévus pour freiner les barres (17) coopérant avec les tambours (13), moyens de freinage (20) qui sont placés en regard des chambres (16).

3. Appareil selon la revendication 2, caractérisé en ce que le convoyeur est constitué d'une crémaillère (21) suivie d'un ensemble formant transporteur à chaîne (22) sous lequel sont installés des ventilateurs (23).

4. Appareil selon la revendication 2, caractérisé en ce que coopèrent, avec les tambours (13), des rouleaux (18, 18a) permettant de faire avancer les barres, qui ont pour tâche de faire avancer les barres (17), rouleaux (18, 18a) qui sont orientés en direction de l'intérieur des chambres (16).

5. Appareil selon la revendication 2, caractérisé en ce que les moyens de freinage (20) sont de type magnétique.

6. Appareil selon la revendication 2, caractérisé en ce que l'appareil (11) comprend un convoyeur à chaîne (113).

7. Appareil selon la revendication 2, caractérisé en ce que les moyens de freinage sont de type mécanique.

8. Appareil selon la revendication 7, caractérisé en ce que les moyens de freinage sont constitués par des blocs de freinage.

9. Appareil selon la revendication 7, caractérisé en ce que les moyens de freinage sont constitués par des rouleaux.

10. Appareil selon la revendication 7, caractérisé en ce que les moyens de freinage sont constitués par des bancs de support, le long desquels les barres se déplacent avec friction.
